Europäisches Patentamt

European Patent Office

Office européen des brevets

(19)

(11) Veröffentlichungsnummer : **0 129 673**
**B1**

(12) # EUROPÄISCHE PATENTSCHRIFT

(45) Veröffentlichungstag der Patentschrift :
30.07.86

(51) Int. Cl.⁴ : **A 21 D 15/04**, A 23 L   3/16

(21) Anmeldenummer : 84104782.2

(22) Anmeldetag : 27.04.84

(54) **Verfahren zur drucklosen Hitzepasteurisierung von Brotscheiben.**

(30) Priorität : 28.06.83 DE 3323166

(43) Veröffentlichungstag der Anmeldung :
02.01.85 Patentblatt 85/01

(45) Bekanntmachung des Hinweises auf die Patenterteilung : 30.07.86 Patentblatt 86/31

(84) Benannte Vertragsstaaten :
AT CH FR LI NL SE

(56) Entgegenhaltungen :
AT-B-   195 739
DE-A- 2 205 987
DE-A- 2 612 571

(73) Patentinhaber : Hammel, Anton Dieter, Dr.
Wolfsgraben 11
D-3440 Eschwege (DE)

(72) Erfinder : Hammel, Anton Dieter, Dr.
Wolfsgraben 11
D-3440 Eschwege (DE)

(74) Vertreter : Goddar, Heinz J., Dr. et al
FORRESTER & BOEHMERT Widenmayerstrasse 4/l
D-8000 München 22 (DE)

EP 0 129 673 B1

## Beschreibung

Die Erfindung betrifft ein Verfahren zur drucklosen Hitzepasteurisierung von päckchenweise gestapelten Brotscheiben, bei dem der Brotscheibenstapel hermetisch mittels einer als Verpackungsmaterial dienenden Kunststoffolie oder dergleichen verpackt und die Packung alsdann zur Abtötung gegebenenfalls vorhandener Bakterien, Schimmelsporen oder dergleichen bei einer zur Pasteurisierung ausreichenden Temperatur getempert wird.

Zur Haltbarmachung von Brotscheiben sind verschiedenartige Verfahren bekannt. Einmal kann man dem Brot bei der Zubereitung Konservierungsstoffe zusetzen, eine Vorgehensweise, die weitestgehend verbreitet ist, allerdings nur bei Schnittbrot, wo derartige Konservierungsstoffe zugelassen sind. Zum anderen erfolgt seit neuerem eine Behandlung der Brotscheiben durch Begasung mit $CO^2$, wodurch zwar das Auskeimen der Schimmelsporen verhindert wird, diese aber ebensowenig abgetötet werden wie beim Zusatz chemischer Konservierungsstoffe. Schließlich lassen sich die Schimmelsporen durch Hitzeeinwirkung im Wege der Pasteurisierung tatsächlich abtöten, wobei einerseits offene Öfen, die bei atmosphärischem Druck arbeiten und in herkömmlicher Weise beheizt werden, und andererseits geschlossene Öfen Verwendung finden, die einen Überdruck zulassen. Beim Überdruckverfahren werden die Brotscheiben in einen Autoklaven eingebracht und dort beispielsweise durch Einwirkung von Wasserdampf mit einem Druck von 1,3 bar über 1 bis 1,5 Stunden pasteurisiert.

Seit langem ist ein Verfahren der eingangs genannten Art bekannt, bei dem in der Regel große Durchlauföfen Verwendung finden, durch welche die einzelnen Brotstapel in entsprechenden Behältern, beispielsweise aus Polypropylen bestehend, hindurchgefahren werden. Bei dem Temperungsprozeß bombieren die Packungen durch Luftausdehnung und Wasserverdampfung. Sofern das Verfahren dahingehend modifiziert ist, daß der Brotscheibenstapel nicht hermetisch, sondern so verpackt ist, daß im Packungsinneren entstehender Überdruck durch labyrinthartige Verschlüsse oder dergleichen nach außen dringen kann, ist die Packung bei diesem Verfahren nicht gefährdet. Bei neuartigen Verpackungsverfahren, bei denen Wert darauf gelegt wird, daß der Brotscheibenstapel hermetisch verpackt wird, um beispielsweise mit Sicherheit ein Eindringen von Bakterien etc. während der Lagerung bzw. des Transportes in den Brotscheibenstapel zu verhindern, kann es durch die auftretende Bombage zu Schwierigkeiten kommen, die sogar zum Zerreißen der Verpackungsfolie oder dergleichen führen können. Außerdem hat es sich gezeigt, daß die drucklose Pasteurisierung in Durchlauföfen oder dergleichen verhältnismäßig großen Zeitaufwand erfordert, bedingt dadurch, daß die gesamte zur Pasteurisierung dienende Wärme ja durch die Verpackungsfolie und den Brotscheibenstapel selbst ausschließlich im Wege der Wärmeleitung bis in das Innere des Brotscheibenstapels vordringen muß.

Aus der AT-B-195 739 ist ein Verfahren zum Frischhalt-Verpacken von Schnittbrot bekannt, bei dem die Brotscheiben mit einer luft- und feuchtigkeitsdichten, schweißbaren Kunststoffolie umhüllt werden, woraufhin die Hülle dann luftdicht zugeschweißt und die Packung in bekannter Weise sterilisiert wird, wobei in der Hülle vor dem Sterilisieren ein Unterdruck erzeugt wird.

Der Erfindung liegt daher die Aufgabe zugrunde, das Verfahren der gattungsgemäßen Art dahingehend weiterzubilden, daß auf einfache Weise mit verringertem Zeit- und Kostenaufwand eine einwandfreie Pasteurisierung von hermetisch verpackten Brotscheibenstapeln ohne jedwede Gefahr einer Beschädigung des Verpackungsmaterials gewährleistet ist.

Erfindungsgemäß wird diese Aufgabe bei einem Verfahren der gattungsgemäßen Art dadurch gelöst, daß der Brotscheibenstapel unmittelbar vor dem Verpackungsvorgang erhitzt wird.

Dabei kann vorgesehen sein, daß die Erhitzungstemperatur ca. 50-90 °C beträgt.

Die Erfindung sieht weiterhin gegebenenfalls vor, daß die Erhitzung des Brotscheibenstapels durch Einwirkung von Wärmestrahlung erfolgt.

Erfindungsgemäß kann auch vorgesehen sein, daß der Brotscheibenstapel zur Erhitzung mit Heißluft beaufschlagt wird.

Eine weitere Ausführungsform der Erfindung zeichnet sich dadurch aus, daß der Brotscheibenstapel zur Erhitzung mit befeuchteter Warmluft oder Wasserdampf mit einem Druck von 0 bis 4-5 bar beaufschlagt wird. Dabei kann insbesondere vorgesehen sein, daß die befeuchtete Warmluft bzw. der Wasserdampf mittels in den Brotscheibenstapel einführbarer rohrförmiger, dünner Lanzen in den Brotscheibenstapel eingeblasen wird.

Schließlich wird erfindungsgemäß auch vorgeschlagen, daß auch das Verpackungsmaterial unmittelbar vor dem Verpackungsvorgang in der Erhitzung des Brotstapels entsprechender Weise erhitzt wird.

Dadurch, daß erfindungsgemäß eine Erhitzung des Brotscheibenstapels bereits vor der hermetischen Umhüllung mittels des Verpackungsmaterials erfolgt, wird die Luft innerhalb des Verpackungsmaterials bzw. Verpackungsbeutels oder dergleichen so erwärmt, daß sie sich nach dem hermetischen Verschließen des Beutels oder dergleichen deutlich zusammenzieht, wodurch das Verpackungsmaterial stramm am Brot ansitzt. Hierdurch wird der Effekt der zu diesem Zweck üblicherweise vorgesehenen Luftabsaugung oder auch des üblicherweise vorgesehenen Anbürstens des Beutels oder dergleichen an den Brotscheibenstapel deutlich verbessert. Wird, wie dies erfindungsgemäß vorzugsweise vorgesehen ist, auch Warmluft oder aber Wasserdampf in den Brotscheibenstapel hineingeblasen, so wird dieser in besonders vorteilhafter Weise von innen her erhitzt, mit deutlich verbessertem Wärmeübergang. Das Verfahren des Eintauchens von Lanzen, wie es erfindungsgemäß vorgesehen ist, um befeuchtete Warmluft oder aber satten Wasserdampf in die Brotscheiben einzublasen, ist bei der $CO_2$-Begasung bereits bekannt, jedoch wird hierdurch erfindungsgemäß lediglich eine Erhitzung des Brotes bzw. ein Austausch der kalten Luft gegen warme Frischluft vorgenommen. Dadurch, daß erfindungsgemäß der Brotscheibenstapel auf eine entsprechend hohe Temperatur bereits vor dem Verpackungsvorgang erhitzt wird, läßt sich der anschließende Pasteurisierungsvorgang ca. um die Hälfte reduzieren. Die Packung selbst erfährt während des Pasteurisierungsvorganges keinerlei Druckverformung, so daß Beschädigungen des Verpackungsmaterials ausgeschlossen sind. Das erfindungsgemäße Verfahren führt nicht nur zu absolut dichten Brotverpackungen, sondern senkt auch den für die Pasteurisierung erforderlichen Energieaufwand und führt insbesondere zu Verpackungen mit besonderer Schimmelwachstumsresistenz der verpackten Brotscheiben.

Das an das erfindunsgemäße Verfahren anschließende Pasteurisierungsverfahren kann in herkömmlicher Weise erfolgen, beispielsweise durch Einwirkung von Thermo-öl-Heizöfen, Wasserdampf-Heizöfen, elektrischen Plattenöfen, Infrarotöfen oder Mikrowellenbestrahlungsöfen.

Weitere Merkmale und Vorteile der Erfindung ergeben sich aus der nachfolgenden Beschreibung, in der ein Ausführungsbeispiel im einzelnen erläutert ist.

Beispiel

Brot wird in üblicher Weise geschnitten und in Brotscheibenstapeln angeordnet auf einem Transportband einer Folienverpackungsstation zugeführt. Vor Erreichen der Folienverpackungsstation durchlaufen die Brotscheibenstapel eine Erhitzungsstation, in der von beiden Seiten oder von oben dünne, rohrförmige Lanzen in jeden der Brotscheibenstapel eingeführt werden, woraufhin bei einem Druck von 0,4 bar satter Wasserdampf durch die Lanzen in die Brotscheibenstapel eingeblasen wird. Die Temperatur der Brotscheibenstapel steigt hierbei auf ca. 50-60 °C. Nach dem Verlassen der Erhitzungsstation gelangen die erhitzten Brotscheibenstapel unmittelbar in die Verpackungsstation, wo eine hermetische Verpackung in Kunststoffbeuteln erfolgt. Die Kunststoffbeutel legen sich nach Beendigung des Verpackungsvorganges bzw. nach dem Verschließen der Beutel stramm an die Brotscheibenstapel an, bewirkt durch deren allmähliche Abkühlung. Anschließend erfolgt dann ein erneutes Erhitzen in einem üblichen Pasteurisierungsofen, wobei keine Bombage der Packungen mehr zu beobachten ist.

Die auf diese Weise hergestellten und verpackten Brotscheibenstapel sind absolut dicht und hermetisch verpackt und zeichnen sich durch eine besondere Schimmelwachstumsresistenz aus. Der Pasteurisierungsvorgang nimmt lediglich etwa die Hälfte der üblichen Zeit in Anspruch.

Die in der vorstehenden Beschreibung und in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

**Patentansprüche**

1. Verfahren zur drucklosen Hitzepasteurisierung von päckchenweise gestapelten Brotscheiben, bei dem der Brotscheibenstapel hermetisch mittels einer als Verpackungsmaterial dienenden Kunststoffolie verpackt und die Packung alsdann zur Abtötung gegebenenfalls vorhandener Bakterien, Schimmelsporen oder dergleichen bei einer zur Pasteurisierung ausreichenden Temperatur getempert wird, dadurch gekennzeichnet, daß der Brotscheibenstapel unmittelbar vor dem Verpackungsvorgang erhitzt wird.

2. Verfahren nach Anspruch 1, dadurch gekennzeichnet, daß die Erhitzungstemperatur ca. 50-90 °C beträgt.

3. Verfahren nach Anspruch 1 oder 2, dadurch gekennzeichnet, daß die Erhitzung des Brotscheibenstapels durch Einwirkung von Wärmestrahlung erfolgt.

4. Verfahren nach einem der vorangehenden Ansprüche, dadurch gekennzeichnet, daß der Brotscheibenstapel zur Erhitzung mit Heißluft beaufschlagt wird.

5. Verfahren nach einem der vorangehenden Ansprüche, dadurch gekennzeichnet, daß der Brotscheibenstapel zur Erhitzung mit befeuchteter Warmluft oder Wasserdampf mit einem Druck von 0 bis 4-5 bar beaufschlagt wird.

6. Verfahren nach Anspruch 5, dadurch gekennzeichnet, daß die befeuchtete Warmluft bzw. der Wasserdampf mittels in den Brotscheibenstapel einführbarer rohrförmiger, dünner Lanzen in den Brotscheibenstapel eingeblasen wird.

7. Verfahren nach einem der vorangehenden Ansprüche, dadurch gekennzeichnet, daß auch das Verpackungsmaterial unmittelbar vor dem Verpackungsvorgang in der Erhitzung des Brotstapels entsprechender Weise erhitzt wird.

**Claims**

1. A process for the pressureless heat pasteurization of slices of bread stacked packet-wise, in which the stack of slices of bread is hermetically packed by means of a plastics sheeting used as packaging material and the pack is then heated at a temperature sufficient for pasteurization, in order to kill any bacteria, mould spores, or the like present, characterized in that the stack of slices of bread is heated immediately before the packing operation.

2. A process according to claim 1, characterized in that the heating temperature is about 50 to 90 °C.

3. A process according to claim 1 or 2, characterized in that heating of the stack of slices of bread is effected by the action of heat radiation.

4. A process according to any one of the preceding claims, characterized in that the stack of slices of bread is subjected to hot air for heating purposes.

5. A process according to any one of the preceding claims, characterized in that the stack of slices of bread is subjected to moistened hot air or steam at a pressure of 0 to 4-5 bars for heating purposes.

6. A process according to claim 5, characterized in that the moistened hot air or the steam is blown into the stack of slices of bread by means of thin tubular lances introducible into said stack.

7. A process according to any one of the preceding claims, characterized in that the packaging material is also heated immediately before the packaging operation in the same way as the stack of bread is heated.


**Revendications**

1. Procédé pour pasteuriser à chaud, sans application de pression, des tranches de pain empilées en petits paquets, dans lequel la pile de tranches de pain est emballée hermétiquement à l'aide d'une feuille de résine synthétique servant de matière d'emballage et l'emballage soumis ensuite à un chauffage à une température suffisante pour la pasteurisation afin de tuer les bactéries, spores de moisissures ou germes analogues, éventuellement présents, ce procédé caractérisé par le fait que, immédiatement avant l'opération d'emballage, on chauffe la pile de tranches de pain.

2. Procédé selon la revendication 1, caractérisé par le fait que la température du chauffage est d'environ 50 à 90 °C.

3. Procédé selon la revendication 1 ou 2, caractérisé par le fait que la pile de tranches de pain est chauffée par action d'un rayonnement de chaleur.

4. Procédé selon l'une quelconque des revendications précédentes, caractérisé par le fait que la pile de tranches de pain est chauffée par exposition à de l'air chaud.

5. Procédé selon l'une des revendications précédentes, caractérisé par le fait que, pour le chauffage de la pile de tranches de pain, on l'expose à de l'air chaud humidifié ou à de la vapeur d'eau à une pression de 0 à 4-5 bars.

6. Procédé selon la revendication 5, caractérisé par le fait que l'air chaud humidifié ou la vapeur d'eau est insufflé dans la pile de tranches de pain à l'aide de lances tubulaires minces pouvant être introduites dans cette pile.

7. Procédé selon l'une des revendications précédentes, caractérisé par le fait que, immédiatement avant l'opération d'emballage, la matière d'emballage est également chauffée, de la même manière que la pile de pain.